# EUROPEAN PATENT APPLICATION

(11) **EP 2 144 388 A2**
(43) Date of publication of application: **13.01.2010**
(21) Application number: 09008981.4
(22) Date of filing: 09.07.2009
(51) Int. Cl.: H04J 14/02

(54) **Hybrid optical communication network**

(30) Priority: 11.07.2008 KR 20080067584
(71) Applicant: LG - Nortel Co., Ltd., 679, Yeoksam-dong Gangnam-gu Seoul (KR)
(72) Inventor: Rhy, Hee Yeal, Ansan-si, Gyeonggi-do 425-906 (KR); Kim, Young Jae, Daejeon 305-509 (KR); Lee, Dong Bae, Seongnam-si Gyeonggi-do 462-804 (KR); Sorin, Wayne V., Mountain View, CA 94040 (US)
(74) Representative: Katérle, Axel

(57) **Abstract**

A hybrid network optical communication system is provided. The system may include a central office, at least one network group coupled to the central office. The network group may include a plurality of external rings, and each of the external rings may include a plurality of nodes having a ring connection. This system may have economical advantages of reducing the number of optical cores and easily switching directions for protecting the system when any problems occur on the optical cores and the devices at nodes.

## Description

This application claims priority from Korean Patent Application No. 10-2008-67584, filed on July 11, 2008, the subject matter of which is incorporated herein by reference.

### BACKGROUND OF THE INVENTION

### 1. Field

Embodiments of the present invention may relate to an optical communication system. More particularly, embodiments of the present invention may relate to a wavelength divisional multiplexing communication system for providing a hybrid network of a ring network and a star network.

### 2. Background

Optical wavelength division multiplexing (WDM) is a technology which multiplexes multiple optical carrier signals on a single optical fiber by using different wavelengths (colours) of laser light to carry different signals. Thus, communication capacity can be expanded significantly with the use of an optical fiber as a transmission line. The WDM also enables bidirectional communications over one strand of fiber. In such cases, a plurality of optical transmitters are used to transmit optical signals having mutually different wavelengths. Those optical signals, each having a different wavelength from each other, are multiplexed by a wavelength division multiplexer and then transmitted to the transmission line.

A central office CO of a WDM optical communication system forms a local loop. This local loop includes subscriber home and business lines (nodes) for connecting one another. In order to allow communication between two or more nodes, in one or more directions, various network topologies, such as a linear network, a ring network, a star network and so on, are adopted.

### BRIEF DESCRIPTION OF THE DRAWINGS

Arrangements and embodiments are described in detail with reference to the following drawings in which like reference numerals refer to like elements and wherein:
FIG. 1 illustrates an optical communication system according to an example embodiment of the present invention;
FIG. 2 illustrates an optical communication system according to an example embodiment of the present invention;
FIG. 3 illustrates an optical communication system according to an example embodiment of the present invention;
FIG. 4 illustrates an optical communication system according to an example embodiment of the present invention;
FIG. 5 illustrates an optical communication system according to an example embodiment of the present invention;
FIG. 6 shows a schematic diagram of cyclic characteristics of wavelengths;
FIG. 7 shows a schematic diagram of ports of a multiplexer configured with thin films;
FIG. 8 shows a schematic diagram of the transmission and reflection of signals at a node filter;
FIG. 9 shows a schematic diagram of wavelength selection characteristics of a node filter;
FIG. 10 shows a schematic diagram of the transmission and reflection of signals at two node filters;
FIG. 11 shows a schematic diagram of the transmission and reflection of signals at four node filters; and
FIG. 12 shows a schematic diagram of the wavelength selection characteristics of the node filters.

### DETAILED DESCRIPTION

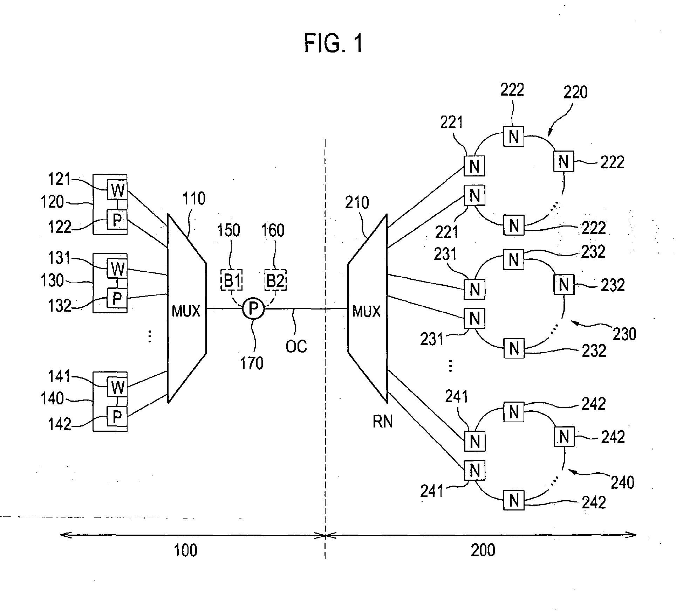

Referring to FIG. 1, an optical communication system may include central office 100 and at least one network group 200 coupled to central office 100. Network group 200 may include a plurality of external rings 220, 230, 240. Also, network group 200 may include at least one external (out of central office 100) wavelength division multiplexer (MUX) 210 shared by works 220, 230, 240. The MUX 210 may be configured with a wavelength division multiplexer. External MUX 210 may be located at a remote node RN. Each of the external rings 220, 230, 240 may include a plurality of nodes having a ring-type connection. At least one node 221, 231, 241 among the nodes in each external ring 220, 230, 240 may be connected to external MUX 210 without going through any other nodes in the external ring. The other nodes 222, 232, 242 may be connected to external MUX 210 through at least one node. Two nodes 221, 231, 241 of each external ring 220, 230, 240 are connected through different optical fibers to external MUX 210 without going through any other nodes in external ring 220, 230, 240. If any errors occur on the devices in nodes 221, 222, 231, 232, 241 and 242 of external rings 220, 230, 240 (which are coupled to external MUX 210), the direction of signal transmission in each external ring can be switched so that signals are not transmitted through the nodes where an error occurs.

Central office 100 may include at least one internal (inner part of central office 100) multiplexer (MUX) 110, having the same characteristics as external MUX 210. Internal and external MUXs 110, 210 may be connected through at least one optical core OC. At least one optical line terminal (OLT) 120, 130, 140 may be connected to the internal MUX 110. Each OLT 120, 130, 140 may include a primary light source (not shown). Also, each OLT 120, 130, 140 may be configured to have working equipment 121, 131, 141 and protective equipment 122, 132, 142, which are connected to the internal MUX 110 through different optical fibers. The working and protective equipment may be formed independently with the same configurations for providing dual homing protection. Working equipment 121, 131, 141 and protective equipment 122, 132, 142 may be optical transmitters, optical receivers or other optical devices including an optical transmitter and an optical receiver.

As shown in FIG. 1, a working equipment 121, 131 or 141 and corresponding protective equipment 122, 132 or 142 in OLTs 120, 130 or 140, internal MUX 110 and external MUX 210, nodes 221, 222, 231, 232, 241, 242 in external ring 220, 230, 240 may form logical ring networks. For an example, in FIG. 1, the combination of working equipment 121, protective equipment 122 in OLT 120, and internal MUX 110, external MUX 210, nodes 221, 222 in external ring 220 may form a logical ring network. Similarly, the combination of working equipment 131 and protective equipment 132 in optical line terminal 130 and internal MUX 110, external MUX 210, nodes 231 and 232 in external ring 230 may form another logical ring network. In this fashion, a plurality of logical ring networks may be obtained to equal the number of OLTs in the central office 100.

Referring again to FIG. 1, the optical communication system may further include two secondary light sources 150, 160 configured to provide a colorless function for upstream signals and down stream signals transmitted through optical core OC, respectively. The secondary light sources 150, 160 may be incoherent broad band light sources (BLS) for injection locking or multi-channel wavelength sources. By adopting secondary light sources 150, 160 in consideration of the colorless function, multi-wavelengths may be managed more easily. Further, the number of optical devices needed at each of the nodes in each of the external rings or the OLTs mat be remarkably reduced through the use of the colorless function. Coupling means 170 may couple the secondary light sources 150 and 160 to the optical core OC. Coupling means 170 may be configured with circulators and wavelength separating filters.

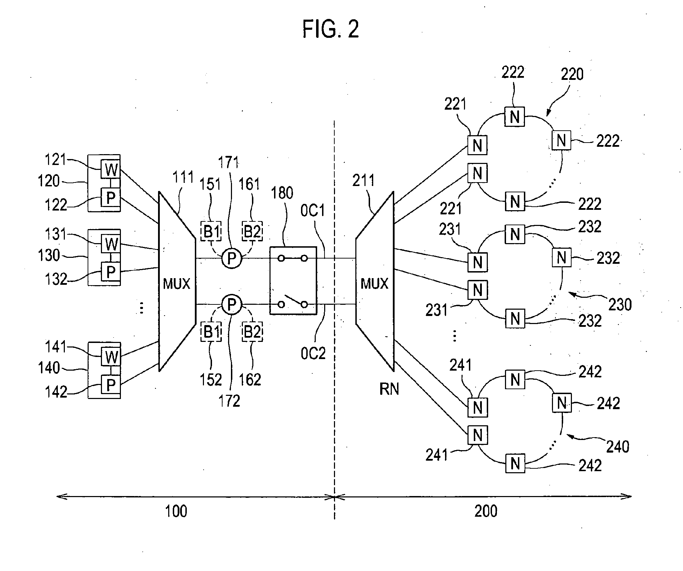

An optical communication system may include arrayed waveguide gratings as internal and external MUXs 111, 211, as shown in FIG. 2. Each of MUXs 111, 211 may have an even number of ports having as many as twice the number of wavelengths m (as much as 2 x m). Optical switch 180 may switch the two ports for each wavelength. In the optical communication system shown in FIG. 2, it may be possible to protect the connection between central office 100 and external MUX 211 by switching ports as well as protecting external ring 220-240 by switching directions. The optical communication system may further include two secondary light sources 151, 161 configured to provide the colorless function for upstream signals and down stream signals transmitted through optical cores OC1, respectively, and two secondary light sources 152, 162 for upstream signals and down stream signals transmitted through optical cores OC2, respectively. Coupling means 171, 172 may couple the secondary light sources 151 and 161 to the optical core OC1 and the secondary light sources 152 and 162 to the optical core OC2, respectively. Coupling means 171, 172 may be configured with circulators and wavelength separating filters.

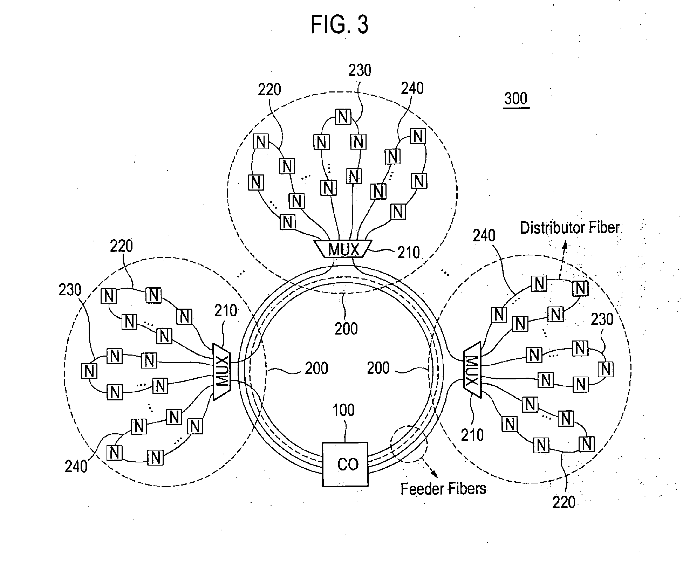

Referring to FIG. 3, optical communication system 300 may include a plurality of network groups 200, wherein each network group includes a plurality of external rings 220, 230, 240. Between central office 100 and each network group 200, the signals may be transmitted through feeder fibers. Distributor fibers may be adopted to transmit signals through nodes in each external ring 220, 230 or 240. Central office 300 and each of network group 200 may form a ring hybrid star network. A logical ring network may be formed with external rings 220, 230 and 240 in each network group 200 and OLTs in central office 300. Namely, the combination of working equipment 121, 131 or 141, protective equipment 122, 132 or 142 in OLT 120, 130 or 140, internal and external MUXs 110, 210 and nodes N in each ring 220, 230 or 240 may form a logical ring network that is connected to a star network. Thus, the optical communication system may be configured with hybrid networks using external rings and a star network, i.e., ring hybrid star network. MUXs 210 in FIG. 3 may be configured with array waveguide gratings like MUXs 211 shown in FIG. 2.

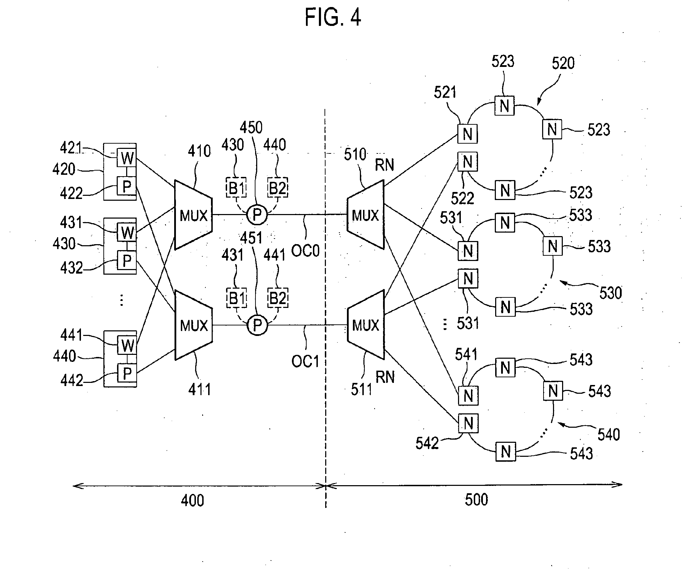

Referring FIG. 4, an optical communication system may include central office 400 and at least one network group 500 coupled to the central office 400. Network group 500 may include a plurality of external rings 520, 530, 540. Also, network group 500 may include two external multiplexers (MUXs) 510, 511 shared by external rings 520, 530, 540. External MUXs 510, 511 may be located at a remote node RN and may be configured with wavelength division multiplexers. Each of the external rings 520, 530, 540 may include a plurality of nodes N having a ring-type connection. At least one node 521, 531, 541 in each of external rings 520, 530, 540 may be connected to one external MUX 510. At least one node 522, 532, 542 in each of external rings 520, 530, 540 may be connected to the other external MUX 511, without going through any other nodes in the external ring. Other nodes 523, 533, 543 may be connected to external MUXs 510, 511 through at least one node.

Central office 400 may include a plurality of internal MUXs 410, 411, having the same characteristics as external MUXs 510, 511, respectively. External MUXs 510, 511 may be connected to the external MUXs 410, 411 through optical cores OC0, OC1. Optical line terminals (OLTs) 420, 430, 440 may be connected to the internal MUXs 410, 411. Each of the OLTs 420, 430, 440 may include a primary light source (not shown). Also, OLTs 420, 430, 440 may be configured to have working equipment 421, 431, 441 and corresponding protective equipment 422, 432, 441. Working and protective equipment may be formed independently with the same configurations and may provide a dual homing protection. Working equipment 421, 431, 441 and protective equipment 422, 432, 442 may be optical transmitters, optical receivers or other optical devices including an optical transmitter and an optical receiver. The combination of working equipment 421, 431 or 441, protective equipment 422, 432 or 442 in optical line terminal 420, 430 or 440, internal and external MUXs 410, 411, 510, 511 and nodes N in external ring 520, 530 or 540 may form a logical ring network.

The optical communication system of FIG. 4 may further include secondary light sources 430, 440, 431, 441 configured to provide a colorless function for upstream signals and down stream signals transmitted through optical cores OC1 and OC2. Coupling means 450, 451 may couple the secondary light sources 430, 440, 431, 441 to the optical cores OC1 and OC2. Coupling means 450, 451 may be configured with circulators and wavelength separating filters.

The number of internal and external MUXs may be changed according to the numbers of OLTs in the central office and the external ring.

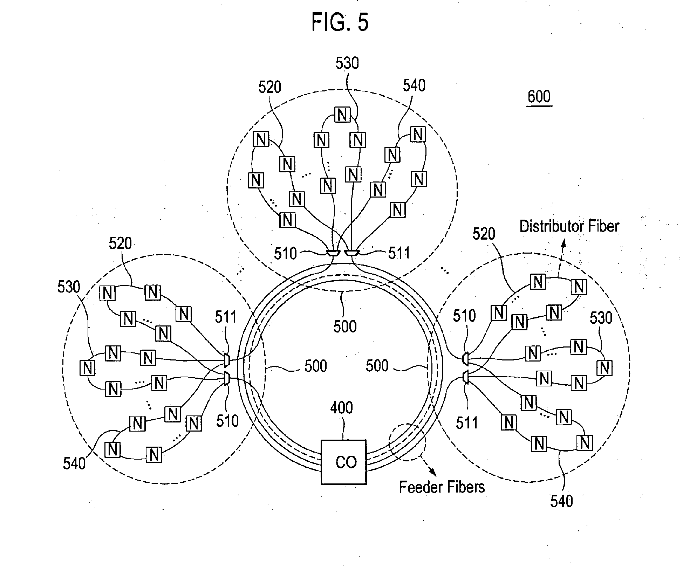

Referring to FIG. 5, optical communication system 600 may include a plurality of network groups 500. Each network group 500 may include a plurality of external rings 520, 530, 540. Between central office 400 and each network group 500, signals may be transmitted through feeder fibers. Central office 400 and each network group 500 may form a ring network. A ring hybrid star network may be formed with external rings 520, 530 and 540 in each network group 200, external MUXs 510, 511 and OLTs in central office 400. Thus, the optical communication system 600 may be configured with hybrid networks having external rings and star networks.

The external rings 220, 230, 240, 520, 530, 540 shown in FIGs. 2 to 5, may be configured with uni-directional external rings or bi-directional rings. In this case, a combination of working equipment and protective equipment may be configures in one of the OLTs. The external rings may be configured in accordance with a token ring, the Electrical and Electronics Engineers (IEEE) 802.5 specification, the Fiber Distributed-Data Interface (FDDI) standard, the American National Standard Institute (ANSI) X3T9.5 specification, the SONET bidirectional line switch ring, the Synchronous Optical Network (SONET) standards of uni-directional path switched ring, Telcordia GR-1230 specification, Telcordia GR-1400 specification or Resilient Packet Ring (RPR) standard also known as IEEE 802.1. Also, an Ethernet switch module, a Digital Subscriber Line Access Multiplexer (DSLM), a wireless connection device, a home gateway, a radio base station or combinations thereof may be connected to each external ring as remote devices. Nodes N in each of the external rings may be connected through one or more optical fiber(s), optical transmitter(s), optical receiver(s) or optical transmitter/receiver(s). Also, nodes N may be connected to conductor wires, one or more electrical transmitter(s), electrical receiver(s), electrical transmitter/receiver(s) or combinations thereof. The external rings 220, 230, 240, 520, 530, 540 shown in FIGs. 2 to 5, may be configured to provide dual homing protection. In this case, the working equipment and the protective equipment may be divided to be independent..

Also, the external rings 220, 230, 240, 520, 530, 540 shown in FIGs. 2 to 5, may be configured with time division external rings, time division external rings which provide dual homing protection, wavelength division external rings or wavelength division external rings which provide dual homing protection in accordance with configurations of the internal and external multiplexers, communication devices of the nodes, and the OLTs. If the external and internal multiplexers are wavelength division multiplexers, an external node filter and optical transmitters, optical receivers or optical transmitting/receiving devices (not shown) may be introduced between the external rings and the external multiplexers. Further, internal node filters (not shown) may be connected between the OLTs 120, 130, 140, 410, 420, 430 and internal MUX 110, 111, 410 or 411. The number of internal node filters may equal the number of external node filters. The internal node filters, OLTs 120, 130, 140, 410, 420, 430 and internal MUX 110, 111, 410 or 411 may form respective logical ring networks in central office 100, 400. Instead of the internal node filters, additional multiplexers (not shown), for example wavelength division multiplexers, may be connected between corresponding internal MUXs 110, 111, 410, 411 and OLTs 120, 130, 140, 410, 420, 430. The additional multiplexers may have the same bandwidths as those of the external node filters, and a center wavelength on each port of the additional multiplexer may be identical to that of each external node filter.

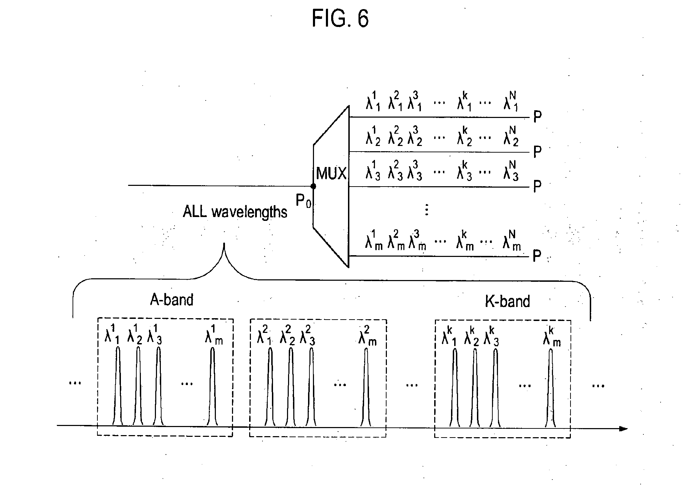

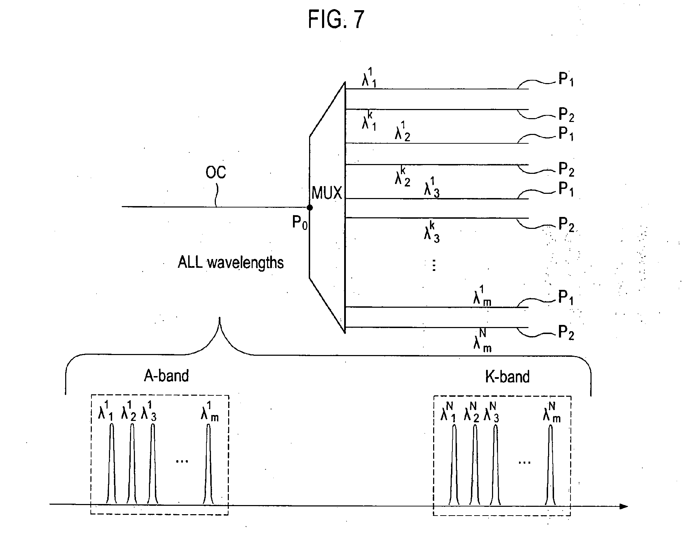

If the logical ring networks in the central office are configured as wavelength division ring networks or the ring networks of the network groups are configured as bidirectional ring networks or the ring networks provide dual homing protection, the internal and external MUXs may be configured with arrayed waveguide gratings (AWG) or a combination of thin films. If the MUXs are configured with the AWG which provide the transmission of cyclic wavelength groups as shown in FIG. 6, the nodes of the external rings may be connected to the external MUX through one port P so that a plurality of cyclic wavelength groups can be output through one port Po of the MUX connected to the optical core. If the external MUXs are configured by combining thin films, each of the external rings may be connected to the MIX through two ports P₁, P₂ for transmitting and receiving signals, as shown in FIG. 7, so that only two cyclic groups of wavelengths are transmitted through port Po of MUX connected to the optical core.

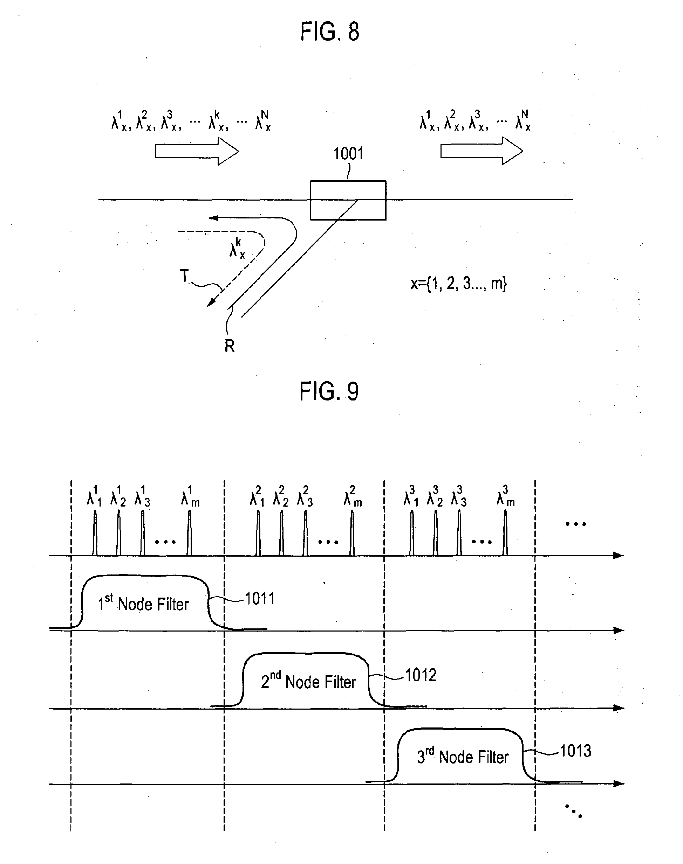

If the logical ring networks in central office and the external rings of the network groups are configured as a unidirectional wavelength division ring network, the internal and external node filters may be configured with a thin film filter. K^{th} node filter 1001 may reflect or transmit wavelength λ^{k}ₓ which corresponds to the x^{th} port of the multiplexer among wavelength λ¹ₓ, λ²ₓ, λ³ₓ, ..., λ^{k}ₓ, ..., λ^{N}ₓ in the same cyclic group x. Also, k^{th} node filter 1001 may transmit or reflect the other wavelengths, as shown in FIG. 8, because the k^{th} node filter may have the wavelength selection characteristics as shown in FIG. 9. Thus, the k^{th} node filter may be used for every port regardless of the port number (1 to m) of the MUXs, when the k^{th} node filter is designed to be operable for every wavelength in the same cyclic group.

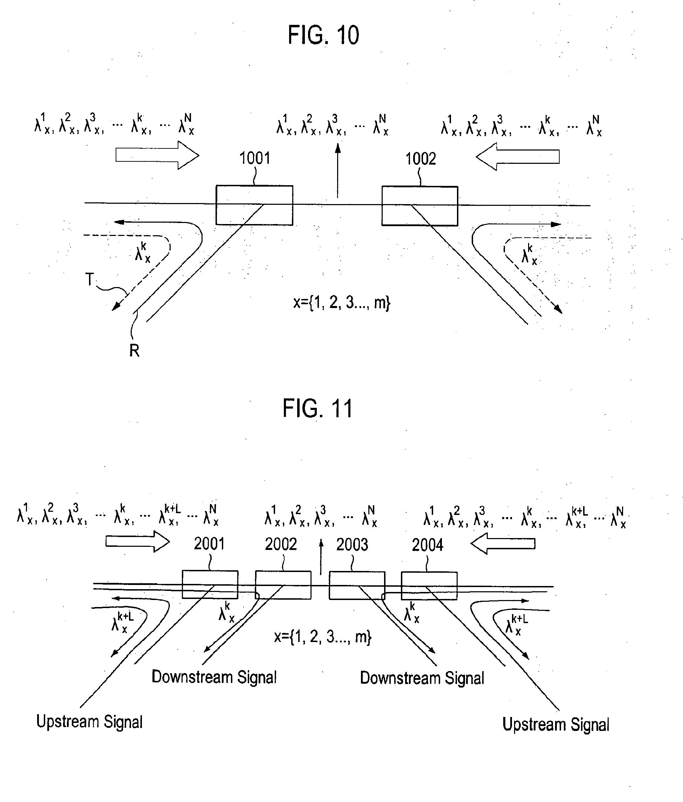

Referring to FIG. 10, the internal and/or external node filters may be configured with two thin film filters 1001 and 1002 arranged in opposite directions. Thus, the optical add-drop multiplexing (OADM) may be obtained in the internal and/or external rings. Further, adopting optical couples or optical switches may be additionally used to duplex optical transmitting or optical receiving channels.

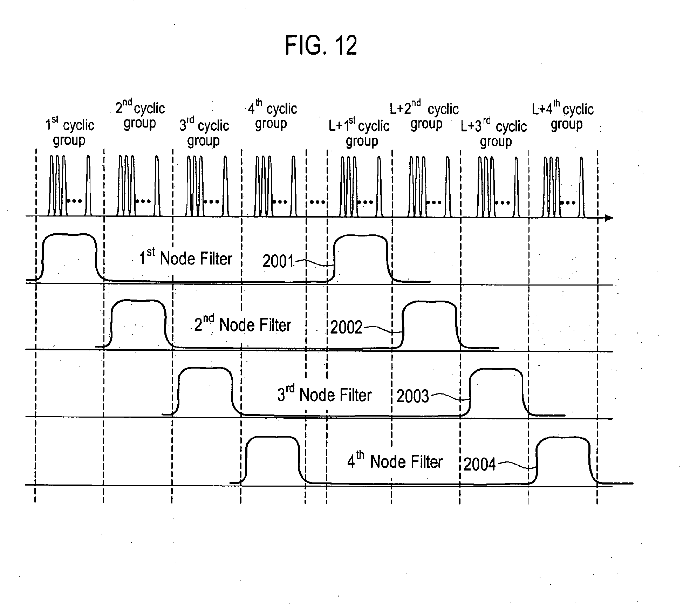

When configuring the logical ring networks in the central office and the external rings of each network group as a bidirectional wavelength division ring network or a wavelength division ring network providing dual homing protection, the cyclic wavelengths in each group may be divided into two sub-groups, one sub-group for upstream signals and the other sub-group for downstream signals. Referring to FIG. 11, k+L^{th} node filter 2001 may reflect or transmit wavelength λ^{k+L}ₓ of upstream signals, and k^{th} node filter 2002 may reflect or transmit wavelength λ^{k}ₓ of downstream signals among wavelength λ¹ₓ, λ²ₓ, λ³ₓ, ..., λ^{k}ₓ, ..., λ^{N}ₓ in the same cyclic group x corresponding to x^{th} port of the multiplexer. Node filters 2003, 2004 may have the same characteristics as nodes filters 2001, 2002, and may be arranged opposite to node filters 2001, 2002. FIG. 12 shows wavelength selection characteristics of node filters 2001-2004 used in a bidirectional wavelength division ring network.

The optical communication systems are configured to have a ring hybrid star network having a star network and external rings as shown in FIGs. 2 to 5, and may have economical advantages of reducing the number of optical cores and easily switching directions for protecting the system when any problems occur on the optical cores and the devices at nodes.

According to an example embodiment of the present invention, an optical communication system may be provided. The system may include a central office, and at least one network group coupled to the central office. The network group may include a plurality of external rings, and each of the external ring may include s a plurality of nodes having a ring connection.

Although embodiments have been described with reference to a number of illustrative embodiments thereof, it should be understood that numerous other modifications and embodiments can be devised by those skilled in the art that will fall within the scope of the principles of this disclosure. More particularly, numerous variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An optical communication system comprising:
a central office; and
at least one network group coupled to the central office, wherein the network group comprises a plurality of external rings , and each of the external ring comprises a plurality of nodes having a ring connection.

2. The optical communication system of claim 1, wherein the network group further comprises at least one external multiplexer shared by the external rings at a remote node.

3. The optical communication system of claim 2, wherein the nodes in each external ring comprises at least one node connected to the external multiplexer without going through any other nodes in the external ring and the other nodes connected to external multiplexer go through at least one node.

4. The optical communication system of claim 3, wherein the central office includes:
at least one internal multiplexer connected to the external multiplexer through at least one optical core;
at least one optical line terminal connected to the internal multiplexer, wherein the optical line terminal includes a primary light source.

5. The optical communication system of claim 4, wherein the central office further comprises:
at least one secondary light sources configured to provide a colorless function for upstream signals and/or down stream signals transmitted through the optical core; and
a coupling means configured to couple the secondary light sources to the optical core.

6. The optical communication system of claim 4, wherein the optical line terminal comprises:
a working equipment and a protective equipment connected to the internal multiplexer through different optical fibers.

7. The optical communication system of claim 4, wherein a working equipment and a protective equipment form a star network with the external rings in each network group.

8. The optical communication system of claim 4, wherein the external multiplexer comprises a plurality of external arrayed waveguide gratings having an even number of ports, the internal multiplexer comprising a plurality of internal arrayed waveguide gratings having an even number of ports, and the central office further comprising an optical switch configured to switch the ports of the external and internal multiplexers.

9. The optical communication system of claim 3, further comprising:
at lease one node filter connected to the optical core between the external and internal multiplexers.

10. The optical communication system of claim 1, wherein each network group includes two external multiplexers shared by the external rings, the nodes in each external ring comprising at least one node connected to one of the external multiplexers and at least one node connected to the other external multiplexer.

11. The optical communication system of claim 10, wherein the central office comprises:
two internal multiplexers respectively connected to the two external multiplexers through two different optical cores; and
at least one optical line terminal connected to two internal multiplexers, wherein the optical line terminal comprises a working equipment connected to one of the internal multiplexers and a protective equipment connected to the other internal multiplexer.

12. The optical communication system of claim 10, wherein a working equipment and a protective equipment form a star network with the external rings in each network group.

13. The optical communication system of claim 10, wherein the central office further comprises:
at least one secondary light sources connected to each optical core for upstream signals and/or down stream signals transmitting through each optical core; and
a coupling means configured to couple the secondary light sources to each optical core.

14. The optical communication system of claim 10, further comprising:
at lease one node filter connected to the optical core between the external and internal multiplexers.
